# EUROPÄISCHE PATENTSCHRIFT

(11) **EP 4 131 188 B1**
(45) Veröffentlichungstag und Bekanntmachung des Hinweises auf die Patenterteilung: **30.09.2026**
(21) Anmeldenummer: 21190115.2
(22) Anmeldetag: 06.08.2021
(51) Int. Cl.: G07C 9/22, G07C 9/15

(54) **SYSTEM, UMFASSEND EINE SCHLEUSE; VERFAHREN ZUR STEUERUNG EINES PERSONENFLUSSES UND/ODER ZUR PERSONENKONTROLLE; COMPUTERPROGRAMMPRODUKT**
SYSTEM COMPRISING A LOCK; METHOD FOR CONTROLLING A FLOW OF PEOPLE AND / OR FOR CONTROLLING PERSONS; COMPUTER PROGRAM PRODUCT
SYSTÈME COMPRENANT UNE ÉCLUSE, PROCÉDÉ DE COMMANDE D'UN FLUX DE PERSONNES ET/OU DE CONTRÔLE DE PERSONNES, PRODUIT-PROGRAMME INFORMATIQUE

(43) Veröffentlichungstag der Anmeldung: 08.02.2023
(73) Patentinhaber: dormakaba Deutschland GmbH, 58256 Ennepetal (DE)
(72) Erfinder: Hoevener, Franz-Josef, Ennepetal (DE)
(74) Vertreter: Balder IP Law, S.L.

(56) Entgegenhaltungen:
- EP-B1- 1 430 449
- CN-U- 213 659 523
- DE-A1- 102006 036 108
- DE-C1- 3 623 792
- JP-A- 2014 006 763
- US-A1- 2017 083 768
- US-A1- 2020 320 814

## Beschreibung

Die Erfindung betrifft ein System, umfassend eine Schleuse, ein Verfahren zur Steuerung eines Personenflusses und/oder zur Personenkontrolle mithilfe einer Schleuse sowie ein Computerprogrammprodukt.

Derartige Schleusen werden beispielsweise an Flughäfen oder Bahnhöfen verwendet oder als Zutrittslösung für ein Gebäude oder Areal. Um die Sicherheit solcher Einrichtungen zu erhöhen, werden Personenkontrollen durchgeführt, in denen Gefahrenstoffe und/oder Waffen und/oder als Waffen einsetzbare Gegenstände detektiert werden sollen. Häufig finden in diesem Zusammenhang ferner Verfahren zur Identitätsprüfung von Personen, beispielsweise an Flughäfen, statt. Ein Ziel hierbei ist es stets, möglichst sichere Prozesse zu implementieren. Die Kontrollen führen dabei häufig zu Verzögerungen und sind ein limitierender Faktor für den Gesamtablauf in solchen Einrichtungen. Andererseits ist typischerweise ein hoher Personalaufwand nötig, um die Kontrollen und Prüfungen mit hoher Sicherheit durchzuführen. Schleusen aus dem Stand der Technik sind aus US2017/083768 A1, CN213 659523 U, DE102006036108 A1 und JP2014006763 A bekannt.

Vor diesem Hintergrund stellt sich die Aufgabe, ein System, ein Computerprogrammprodukt sowie ein Verfahren bereitzustellen, mit denen eine Steuerung eines Personenflusses und/oder eine Personenkontrolle mit einer hohen Sicherheit erreicht werden kann, wobei bevorzugt Zeitverzögerungen und/oder Aufwand reduziert werden können.

Die Aufgabe wird gelöst durch ein System gemäß Anspruch 1.

Erfindungsgemäß kann somit eine besonders vorteilhafte Schleuse bereitgestellt werden, mit der eine effiziente Detektion von Waffen und/oder als Waffen einsetzbaren Gegenständen und/oder Gefahrstoffen und gleichzeitig eine Ermittlung der Personenzahl in der Schleuse möglich ist. Die Möglichkeit wird geschaffen, ohne dass hierfür eigens Sicherheitspersonal an der Schleuse positioniert werden muss, welches Personen einzeln in die Schleuse leitet oder die Personenzahl in der Schleuse überwacht. Es kann erfindungsgemäß mithilfe des Vereinzelungssensors insbesondere sichergestellt werden, dass der Körperscanner eine einzelne Person gescannt hat, sodass eine sichere automatisierte Personenkontrolle erreichbar ist. Es können dadurch Verzögerungen bei einer Personenkontrolle vermieden werden. Hierdurch können Wartezeiten verringert werden, wobei dennoch eine vorteilhafte Sicherheit erreicht werden kann.

Die Schleuse ist vorzugsweise als Personenschleuse ausgebildet, mit der ein Personenfluss steuerbar ist und/oder eine Personenkontrolle durchführbar ist. Insbesondere ist zumindest der Ausgang der Schleuse schließbar, sodass Personen nicht ungehindert die Schleuse passieren können. Vorzugsweise ist ferner der Eingang der Schleuse schließbar.

Bevorzugt ist mithilfe der Schleuse eine Zutrittslösung für ein Areal und/oder ein Gebäude ausgebildet, insbesondere für einen Flughafen und/oder einen Bahnhof. Mithilfe der Schleuse kann eine Steuerung und/oder Kontrolle eines Personenflusses in einen abgesperrten Bereich und/oder einen Sicherheitsbereich erreicht werden.

Darunter, dass der Vereinzelungssensor zur Messung einer Personenzahl im Innenbereich der Schleuse eingerichtet ist, kann gemäß einer Ausführungsform der vorliegenden Erfindung verstanden werden, dass der Vereinzelungssensor derart eingerichtet, dass mithilfe des Vereinzelungssensors zumindest messbar ist, ob die Personenzahl im Innenbereich der Schleuse genau eins beträgt. Somit kann mithilfe des Vereinzelungssensors zumindest ermittelt werden, ob sich genau eine Person im Innenbereich der Schleuse befindet. Vorzugsweise kann mithilfe des Vereinzelungssensors des Weiteren ermittelt werden, ob sich mehr als eine Person im Innenbereich der Schleuse befindet oder ob sich weniger als eine Person im Innenbereich der Schleuse befindet. Es ist bevorzugt denkbar, dass mithilfe des Vereinzelungssensors auch Personenzahlen im Innenbereich der Schleuse von größer als eins exakt bestimmt werden können.

Vorteilhafte Weiterbildungen und Ausgestaltungen der vorliegenden Erfindung können den abhängigen Ansprüchen entnommen werden.

Gemäß einer Ausführungsform der vorliegenden Erfindung ist es vorgesehen, dass der Körperscanner zur Detektion von Gefahrengegenständen am Körper der Person und/oder an der Kleidung der Person eingerichtet ist. Unter Gefahrengegenständen können hierbei beispielsweise Waffen und/oder als Waffen einsetzbare Gegenstände und/oder andere Gefahrstoffe verstanden werden. Vorzugsweise ist der Körperscanner ein Ganzkörperscanner.

Gemäß einer Ausführungsform der vorliegenden Erfindung ist es vorgesehen, dass der Körperscanner mithilfe von Röntgenstrahlung und/oder Terahertzstrahlung zum Scannen des Körpers der Person eingerichtet ist. Mithilfe eines derartigen Körperscanners können auch versteckte Gefahrengegenstände, beispielsweise unterhalb der Kleidung, effektiv detektiert werden.

Gemäß einer Ausführungsform der vorliegenden Erfindung ist es vorgesehen, dass der Vereinzelungssensor und der Körperscanner derart eingerichtet sind, dass eine Messung des Vereinzelungssensors und ein Scannen des Körperscanners unmittelbar nacheinander oder zumindest teilweise gleichzeitig ausgeführt werden. Bevorzugt sind elektrische Schaltungsmittel, insbesondere computerimplementierte Mittel, vorhanden, die den Vereinzelungssensor und den Körperscanner derart ansteuern, dass eine Messung des Vereinzelungssensors und ein Scannen des Körperscanners unmittelbar nacheinander, vorzugsweise ohne dazwischenliegende Pause, oder teilweise gleichzeitig oder vollständig gleichzeitig ausgeführt werden. Somit kann eine besonders hohe Sicherheit erreicht werden. Besonders vorteilhaft ist es dabei denkbar, dass die Messung des Vereinzelungssensors und das Scannen des Körperscanners teilweise oder vollständig gleichzeitig durchgeführt werden, sodass sichergestellt ist, dass die Personenzahl in der Schleuse während des Scannens mit dem Körperscanner bekannt ist. Hierdurch können Täuschungen besonders vorteilhaft unterbunden werden, ohne dass Sicherheitspersonal ununterbrochen an der Schleuse postiert sein muss, um die Personenzahl im Körperscanner während des Scannens zu überwachen. Vorzugsweise ist zumindest der Ausgang der Schleuse während des Scannens mithilfe des Körperscanners und während des Messens mithilfe des Vereinzelungssensors geschlossen. Es ist bevorzugt möglich, dass während des Scannens mithilfe des Körperscanners und während des Messens mithilfe des Vereinzelungssensors sowohl der Eingang als auch der Ausgang der Schleuse geschlossen sind.

Gemäß einer Ausführungsform der vorliegenden Erfindung ist es vorgesehen, dass der Vereinzelungssensor in einem Deckenbereich der Schleuse und/oder an einer seitlichen Wandung der Schleuse und/oder im Innenbereich der Schleuse, insbesondere mittig im Innenbereich der Schleuse, angeordnet ist. Der Vereinzelungssensor ist vorzugsweise derart angeordnet, dass mithilfe des Vereinzelungssensors die Personenzahl im Innenbereich der Schleuse während des Scans des Körperscanners überprüfbar ist.

Gemäß einer bevorzugten Ausführungsform der vorliegenden Erfindung ist der Vereinzelungssensor als Infrarotsensor und/oder optischer Sensor, insbesondere mithilfe einer Kamera, ausgebildet.

Erfindungsgemäß ist es vorgesehen, dass die Schleuse eine Eingangstürvorrichtung am Eingang der Schleuse aufweist, wobei mithilfe der Eingangstürvorrichtung der Eingang schließbar und öffenbar ist, wobei die Schleuse eine Ausgangstürvorrichtung am Ausgang der Schleuse aufweist, wobei mithilfe der Ausgangstürvorrichtung der Ausgang schließbar und öffenbar ist. Es ist insbesondere denkbar, dass die Eingangstürvorrichtung eine Schiebetür, insbesondere automatische Schiebetür, und/oder eine Drehflügeltür, insbesondere automatische Drehflügeltür, umfasst. Es ist insbesondere denkbar, dass die Ausgangstürvorrichtung eine Schiebetür, insbesondere automatische Schiebetür, und/oder eine Drehflügeltür, insbesondere automatische Drehflügeltür, umfasst.

Alternativ ist es denkbar, dass die Schleuse eine verschwenkbare und/oder drehbare Türvorrichtung umfasst, wobei die Türvorrichtung zumindest zwischen einer ersten Stellung und einer zweiten Stellung verschwenkbar und/oder drehbar ist,
wobei in der ersten Stellung der Ausgang mithilfe der Türvorrichtung geschlossen ist und der Eingang geöffnet ist,
wobei in der zweiten Stellung der Eingang mithilfe der Türvorrichtung geschlossen ist und der Ausgang geöffnet ist. Es ist gemäß einer bevorzugten Ausgestaltung denkbar, dass eine Zwischenstellung vorhanden ist, in der mithilfe der verschwenkbaren und/oder drehbaren Türvorrichtung sowohl der Eingang als auch der Ausgang geschlossen sind. Es ist vorzugsweise denkbar, dass die Türvorrichtung während des Scannens mithilfe des Körperscanners und während der Messung mithilfe des Vereinzelungssensors in dieser Zwischenstellung ist, sodass sowohl der Eingang als auch der Ausgang geschlossen sind. Die Schleuse kann somit in besonders vorteilhafter Weise eine drehbare Türvorrichtung mit mindestens einer Öffnung aufweisen, die in Abhängigkeit ihrer Drehstellung:
   - den Eingang, oder
   - den Ausgang, oder
   - sowohl den Eingang als auch den Ausgang
verschließt. Es ist optional denkbar, dass die Türvorrichtung eine Drehstellung aufweist, in der sowohl der Eingang als auch der Ausgang geöffnet sind.

Alternativ oder zusätzlich ist es gemäß einer Ausführungsform der vorliegenden Erfindung denkbar, dass die Eingangstürvorrichtung und/oder die Ausgangstürvorrichtung und/oder die verschwenkbare und/oder drehbare Türvorrichtung eine oder mehrere der folgenden Vorrichtungen umfasst:
- eine Drehtür,
- eine Karusselltür,
- eine Sicherheitskarusselltür,
- eine Faltschiebetür,
- eine Drehsperre,
- ein Drehkreuz,
- eine Schwenktür.

Insbesondere kann die Schleuse eine Wiedergabevorrichtung aufweisen. Insbesondere kann sie in optischer und/oder akustischer Form der Person innerhalb der Schleuse signalisieren, was für einen erfolgreichen Durchgang insbesondere zusätzlich notwendig ist und/oder welche Aktionen durch die Person durchzuführen sind, um einen erfolgreichen Durchgang zu gewährleisten. Das Signal kann sich dabei auf die Personenzahl und/oder auf vorhandene Gefahrengegenstände, insbesondere deren Stelle, beziehen.

Es ist denkbar, dass die Wiedergabevorrichtung derart angeordnet ist, dass eine Warnmeldung, insbesondere eine Warnmeldung betreffend eine Ermittlung eines Gefahrengegenstands mithilfe des Körperscanners, aus dem Innenbereich der Schleuse nicht wahrnehmbar ist. Dies kann beispielsweise vor-teilhaft sein, um dem Sicherheitspersonal einen Zeit- und/oder Informationsvorsprung gegenüber einer Person in der Schleuse, die einen Gefahrengegenstand mitführt, zu ermöglichen.

Das System weist zusätzlich einen vor dem Eingang der Schleuse angeordneten Vorbereich auf, wobei der Vorbereich durch eine Zutrittseinrichtung betretbar ist,
wobei an der Zutrittseinrichtung oder in der Umgebung der Zutrittseinrichtung
   -- eine Sensoreinrichtung und/oder
   -- eine Identitätskontrolleinrichtung und/oder
   -- eine Ticketkontrolleinrichtung
angeordnet ist, mit deren Hilfe in den Vorbereich eintretende Personen kontrollierbar sind.

Auf diese Weise wird ein System geschaffen, das einen kontrollierten und sicheren Zugang mit wenig Personalaufwand und hoher Sicherheit ermöglicht.

Mit Hilfe der Zutrittseinrichtung in den Vorbereich eintretende Personen zählbar,
wobei das System derart eingerichtet ist, dass:
- mithilfe der Sensoreinrichtung und/oder der Identitätskontrolleinrichtung und/oder der Ticketkontrolleinrichtung eine Zählung der in den Vorbereich eintretenden Personen durchgeführt wird,
- mithilfe der Schleuse, insbesondere mithilfe des Vereinzelungssensors der Schleuse, eine weitere Zählung der den Vorbereich durch die Schleuse verlassenden Personen durchgeführt wird,
- mithilfe der Zählung und der weiteren Zählung eine Personenanzahl innerhalb des Vorbereichs ermittelt und/oder überwacht wird.

Die Sensoreinrichtung an der Zutrittseinrichtung oder in der Umgebung der Zutrittseinrichtung ist beispielsweise mithilfe eines Infrarotsensors und/oder eines optischen Sensors, beispielsweise einer Kamera, ausgebildet. Die Sensoreinrichtung kann insbesondere als weiterer Vereinzelungssensor ausgebildet sein.

Gemäß einer bevorzugten Ausführungsform der vorliegenden Erfindung ist es denkbar, dass an der Zutrittseinrichtung des Vorbereichs und/oder in der Umgebung der Zutrittseinrichtung des Vorbereichs eine Identitätskontrolle mithilfe der Identitätskontrolleinrichtung und/oder eine Ticketkontrolle mithilfe der Ticketkontrolleinrichtung für Personen, die durch die Zutrittseinrichtung in den Vorbereich gelangen, durchgeführt wird. Es ist denkbar, dass die Zutrittseinrichtung, insbesondere ausschließlich, dann öffnet, wenn eine mithilfe der Identitätskontrolleinrichtung durchgeführte Identitätskontrolle und/oder eine mithilfe der Ticketkontrolleinrichtung durchgeführte Ticketkontrolle erfolgreich ist, sodass eine Person nur bei erfolgreicher Identitätskontrolle und/oder erfolgreicher Ticketkontrolle in den Vorbereich gelangen kann. Die Identitätskontrolleinrichtung ist beispielsweise zur Erkennung und/oder Kontrolle eines Passdokuments ausgebildet. Die Ticketkontrolleinrichtung ist beispielsweise zur Erkennung und/oder Kontrolle eines Flugtickets und/oder Zugtickets ausgebildet. Es ist alternativ oder zusätzlich denkbar, dass die Identitätskontrolleinrichtung einen oder mehrere biometrische Sensoren aufweist, beispielsweise zur Gesichtserkennung oder Fingerabdruckerkennung. Erfindungsgemäß wird bei erfolgreicher Identitätskontrolle und/oder erfolgreicher Ticketkontrolle gezählt, sodass mithilfe der Identitätskontrolle und/oder der Ticketkontrolle eine Zählung der in den Vorbereich eintretenden Personen durchgeführt wird. Erfindungsgemäß wird diese mithilfe der Identitätskontrolle und/oder der Ticketkontrolle durchgeführte Zählung mit der weiteren Zählung vergleichen, wobei die weitere Zählung mithilfe des Vereinzelungssensors der Schleuse durchgeführt wird und wobei die weitere Zählung zumindest die den Vorbereich durch die Schleuse verlassenden Personen betrifft. Somit kann durch die Zählung mithilfe der Identitätskontrolle und/oder der Ticketkontrolle sowie durch die weitere Zählung mithilfe der Schleuse eine Personenanzahl innerhalb des Vorbereichs ermittelt und/oder überwacht werden. Es kann ferner festgestellt werden, ob die insgesamt durch die Zutrittseinrichtung in den Vorbereich eingetretene Personenanzahl mit der über die Schleuse aus dem Vorbereich ausgetretenen Personenanzahl übereinstimmt. Hierdurch kann eine besonders hohe Sicherheit erreicht werden. Es ist dabei in besonders vorteilhafter Weise möglich, einen permanenten Abgleich zwischen der Anzahl an aus- und eintretenden Personen zu realisieren.

Der Vorbereich weist gemäß einer bevorzugten Ausführungsform der vorliegenden Erfindung eine Absperrung und/oder Wandung auf und ist im Normalbetrieb, vorzugsweise ausschließlich durch die Zutrittseinrichtung und/oder weitere Zutrittseinrichtungen, betretbar. Die Schleuse, die ebenfalls eine Verbindung zwischen dem Vorbereich und einer Umgebung herstellen kann, ist vorzugsweise derart eingestellt und/oder wird derart betrieben, dass ein Eintreten aus der Umgebung in den Vorbereich durch die Schleuse im Normalbetrieb unterbunden wird. Bevorzugt ist somit der Vorbereich im Normalbetrieb der Schleuse nicht über die Schleuse betretbar.

Gemäß einer bevorzugten Ausführungsform der vorliegenden Erfindung ist es denkbar, dass im Vorbereich oder angrenzend an den Vorbereich ein Gepäckbeförderungsmittel, insbesondere ein Gepäckband, angeordnet ist. Es ist denkbar, dass eine Person mit ihrem Gepäck durch die Zutrittseinrichtung in den Vorbereich gelangt und dort ihr Gepäck an das Gepäckbeförderungsmittel abgibt. Im Folgenden bewegt sich die Person, ohne ihr abgegebenes Gepäck, in die Schleuse. Nach dem erfolgreichen Durchqueren der Schleuse kann die Person ihr Gepäck wieder in Empfang nehmen. Das Gepäck wird bei seiner Beförderung mithilfe des Gepäckbeförderungsmittels vorzugsweise überprüft und/oder kontrolliert, insbesondere mithilfe einer zusätzlichen Sensoreinrichtung, die zur Ermittlung von Gefahrengegenständen und/oder Gefahrstoffen in dem Gepäck eingerichtet.

Es ist gemäß einer Ausführungsform der vorliegenden Erfindung denkbar, dass das System eine Wiedergabevorrichtung aufweist, wobei das System derart konfiguriert ist, dass mithilfe der Wiedergabevorrichtung in Abhängigkeit der Messung der Personenzahl mithilfe des Vereinzelungssensors und/oder in Abhängigkeit des Scans des Körpers mithilfe des Körperscanners eine Warnmeldung ausgebbar ist. Die Warnmeldung signalisiert vorzugsweise, dass ein Gefahrengegenstand detektiert wurde und/oder umfasst zusätzliche Informationen zu dem detektierten Gefahrengegenstand, beispielsweise, um welche Art von Gefahrengegenstand es sich handelt und/oder an welcher Stelle der Gefahrengegenstand von der Person in der Schleuse mitgeführt wird. Zusätzlich oder alternativ signalisiert die Warnmeldung, dass sich mehr als eine Person in der Schleuse befindet. Bevorzugt umfasst die Wiedergabevorrichtung eine optische Wiedergabevorrichtung, insbesondere einen Bildschirm. Alternativ oder zusätzlich ist es denkbar, dass die die Wiedergabevorrichtung eine akustische Wiedergabevorrichtung umfasst, insbesondere einen Lautsprecher. Die Wiedergabevorrichtung ist vorzugsweise derart angeordnet, dass die Warnmeldung für eine oder mehrere Sicherheitspersonen wahrnehmbar ist. Es ist zusätzlich oder alternativ denkbar, dass die Wiedergabevorrichtung derart angeordnet ist, dass eine Warnmeldung vom Innenbereich der Schleuse aus wahrnehmbar ist. Beispielsweise ist es möglich, dass mithilfe der Wiedergabevorrichtung Personen in der Schleuse signalisiert wird, dass sich zu viele Personen im Innenbereich der Schleuse aufhalten, wenn der Vereinzelungssensor detektiert, dass sich mehr als eine Person im Innenbereich der Schleuse befindet. Es ist beispielsweise denkbar, dass die Wiedergabevorrichtung teilweise oder vollständig als Teil der Schleuse ausgebildet ist. Es ist denkbar, dass die Wiedergabevorrichtung derart angeordnet ist, dass eine Warnmeldung, insbesondere eine Warnmeldung betreffend eine Ermittlung eines Gefahrengegenstands mithilfe des Körperscanners, aus dem Innenbereich der Schleuse nicht wahrnehmbar ist.

Dies kann beispielsweise vorteilhaft sein, um dem Sicherheitspersonal einen Zeit- und/oder Informationsvorsprung gegenüber einer Person in der Schleuse, die einen Gefahrengegenstand mitführt, zu ermöglichen.

Ein weiterer Gegenstand der vorliegenden Erfindung ist ein Verfahren zur Steuerung eines Personenflusses und/oder zur Personenkontrolle mithilfe einer Schleuse gemäß eines Systems gemäß einer Ausführungsform der vorliegenden Erfindung,
wobei das Verfahren die folgenden Schritte umfasst:
-- mithilfe des Vereinzelungssensors wird eine Personenzahl im Innenbereich der Schleuse gemessen,
-- mithilfe des Körperscanners wird ein Körper einer Person im Innenbereich der Schleuse gescannt.

Insbesondere können die beiden Schritte unmittelbar nacheinander oder zumindest teilweise gleichzeitig ausgeführt werden.

Hierdurch kann eine zeiteffiziente und sichere Personenkontrolle und/oder Steuerung eines Personenflusses erfolgen. Insbesondere ist es möglich, dass auf die Abstellung von Sicherheitspersonal verzichtet werden kann, welches eigens dafür vorgesehen ist, Personen einzeln in einen Körperscanner zu führen.

Das erfindungsgemäße Verfahren ist insbesondere ein computerimplementiertes Verfahren, bei dem ein, mehrere oder alle Schritte des Verfahrens computerimplementiert ausgeführt werden. Insbesondere werden die einzelnen Komponenten der Schleuse und/oder des Systems computerimplementiert angesteuert.

Gemäß einer bevorzugten Ausführungsform der vorliegenden Erfindung ist es möglich, dass vor der Messung der Personenzahl mithilfe des Vereinzelungssensors und vor dem Scannen des Körpers mithilfe des Körperscanners:
-- sich mindestens eine Person durch den geöffneten Eingang in die Schleuse bewegt, vorzugsweise während der Ausgang der Schleuse geschlossen ist,
-- optional der Eingang der Schleuse geschlossen wird nachdem sich die mindestens eine Person durch den geöffneten Eingang in die Schleuse bewegt hat.

Gemäß einer bevorzugten Ausführungsform der vorliegenden Erfindung ist es möglich, dass der Ausgang der Schleuse in Abhängigkeit der Messung der Personenzahl mithilfe des Vereinzelungssensors und/oder in Abhängigkeit des Scans des Körpers mithilfe des Körperscanners geöffnet wird. Der Ausgang der Schleuse ist bevorzugt während der Messung mithilfe des Vereinzelungssensors und während des Scans mithilfe des Körperscanners durch eine Ausgangstürvorrichtung oder eine verschwenkbaren und/oder drehbaren Türvorrichtung verschlossen. Der Ausgang der Schleuse wird vorzugsweise mithilfe der Ausgangstürvorrichtung oder der verschwenkbaren und/oder drehbaren Türvorrichtung in Abhängigkeit der Messung der Personenzahl mithilfe des Vereinzelungssensors und in Abhängigkeit des Scans des Körpers mithilfe des Körperscanners geöffnet. Somit kann eine besonders vorteilhafte Steuerung des Personenflusses erreicht werden, ohne dass hierfür Sicherheitspersonal im Bereich des Körperscanners ununterbrochen zugegen sein muss, um den Personenfluss in den Körperscanner und aus dem Körperscanner zu steuern.

Gemäß einer bevorzugten Ausführungsform der vorliegenden Erfindung ist es möglich,
-- dass die Messung der Personenzahl mithilfe des Vereinzelungssensors und das Scannen des Körpers mithilfe Körperscanners, bevorzugt zumindest teilweise gleichzeitig, durchgeführt werden während der Ausgang der Schleuse geschlossen ist,
-- wobei der Ausgang der Schleuse ausschließlich dann geöffnet wird, wenn:
   --- die Messung der Personenzahl mithilfe des Vereinzelungssensors ergibt, dass sich genau eine Person im Innenbereich der Schleuse befindet, und zusätzlich
   --- das Scannen des Körpers mithilfe Körperscanners ergibt, dass die Person im Innenbereich der Schleuse keine Gefahrengegenstände mitführt.

Gemäß einer Ausführungsform der vorliegenden Erfindung ist es besonders vorteilhaft möglich, dass - erst bei und/oder nach einem Austritt einer mithilfe des Körperscanners gescannten Person aus der Schleuse - der Eingang der Schleuse geöffnet wird, so dass die nächste Person in die Schleuse eintreten kann. Hierdurch kann eine vorteilhafte Sicherheit erreicht werden.

Gemäß einer bevorzugten Ausführungsform der vorliegenden Erfindung ist es möglich, dass
--- für den Fall, dass die Messung der Personenzahl mithilfe des Vereinzelungssensors ergibt, dass sich mehr als eine Person im Innenbereich der Schleuse aufhält, und/oder
--- für den Fall, dass das Scannen des Körpers mithilfe Körperscanners ergibt, dass eine Person in der Schleuse mindestens einen Gefahrengegenstand mitführt,
der Ausgang geschlossen bleibt und optional eine Warnmeldung mithilfe einer Wiedergabevorrichtung ausgegeben wird.

Ein weiterer Gegenstand der vorliegenden Erfindung ist ein Computerprogrammprodukt, wobei das Computerprogrammprodukt Befehle umfasst, die bei einer Ausführung des Computerprogrammprodukts durch einen Computer, das System veranlassen, ein Verfahren nach einer Ausführungsform der vorliegenden Erfindung auszuführen. Der Computer ist vorzugsweise teilweise oder vollständig als Teil der Schleuse ausgebildet und/oder teilweise oder vollständig extern von der Schleuse ausgebildet. Der Computer ist vorzugsweise zur Ansteuerung des Vereinzelungssensors und des Körpersensors, sowie der Eingangstürvorrichtung, der Ausgangstürvorrichtung und/oder der verschwenkbaren und/oder drehbaren Türvorrichtung ausgebildet. Es ist denkbar, dass der Computer eine einzige Computereinrichtung ist oder dass der Computer mehrere verteilte Computereinrichtung umfasst. Die mehreren Computereinrichtungen können insbesondere an unterschiedlichen Orten angeordnet sein, beispielsweise teilweise als Teil der Schleuse und teilweise als Teil einer Überwachungseinrichtung für das Sicherheitspersonal.

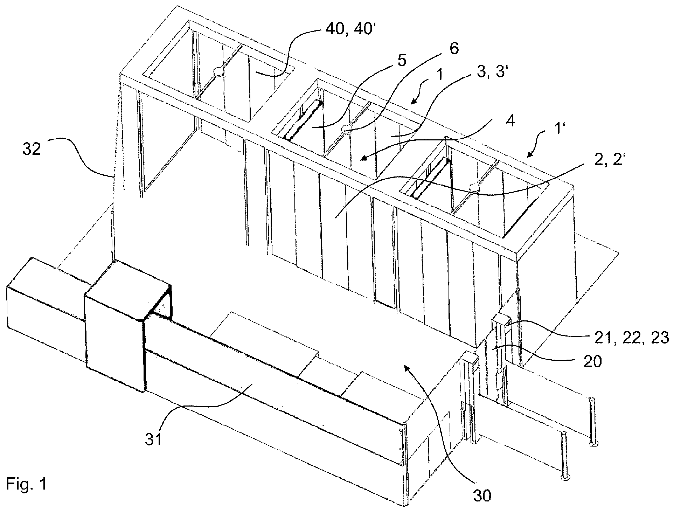

Für das erfindungsgemäße System, das erfindungsgemäße Verfahren und das erfindungsgemäße Computerprogrammprodukt können dabei die Merkmale, Ausführungsformen und Vorteile Anwendung finden, die bereits im Zusammenhang mit der Schleuse oder im Zusammenhang mit einer Ausführungsform der Schleuse beschrieben worden sind. Für das erfindungsgemäße Verfahren und das erfindungsgemäße Computerprogrammprodukt können dabei die Merkmale, Ausführungsformen und Vorteile Anwendung finden, die bereits im Zusammenhang mit dem erfindungsgemäßen System oder im Zusammenhang mit einer Ausführungsform des erfindungsgemäßen Systems beschrieben worden sind. Für das erfindungsgemäße System und das erfindungsgemäße Computerprogrammprodukt können dabei die Merkmale, Ausführungsformen und Vorteile Anwendung finden, die bereits im Zusammenhang mit dem erfindungsgemäßen Verfahren oder im Zusammenhang mit einer Ausführungsform des erfindungsgemäßen Verfahrens beschrieben worden sind. Nachfolgend sollen weitere Vorteile und Einzelheiten der Erfindung anhand des in der Zeichnung dargestellten Ausführungsbeispiels erläutert werden. Hierin zeigt
- Fig. 1: eine schematische Darstellung eines Systems gemäß einem Ausführungsbeispiel der vorliegenden Erfindung.

Das System gemäß der Fig. 1 umfasst dabei eine Schleuse 1, mit deren Hilfe ein Personenfluss gesteuert und eine Sicherheitskontrolle durchgeführt werden kann. Vor der Schleuse 1 ist ein Vorbereich 30 angeordnet. Aus dem Vorbereich 30 kann eine Person durch den Eingang 2 der Schleuse 1 in den Innenbereich 4 der Schleuse 1 gelangen. Der Eingang 2 ist mit einer Eingangstürvorrichtung 2' ausgestattet, insbesondere einer Schiebetür. Durch die Eingangstürvorrichtung 2' kann der Eingang 2 geöffnet und geschlossen werden. In der Schleuse 1 ist ein Personenscanner 5 angeordnet, der vorzugsweise mithilfe von Röntgenstrahlen und/oder Terahertzstrahlen einen Körperscan einer Person ermöglicht, die sich im Innenbereich 4 der Schleuse 1 befindet. Ferner umfasst die Schleuse 1 einen Vereinzelungsscanner 6, der in dem dargestellten Ausführungsbeispiel in einem Deckenbereich der Schleuse 1 angeordnet ist und mit dem ermittelt werden kann, ob sich genau eine Person im Innenbereich 4 der Schleuse 1 befindet. Ferner umfasst die Schleuse 1 einen Ausgang 3 mit einer Ausgangstürvorrichtung 3'. Durch den Ausgang 3 können gescannte Personen aus dem Innenbereich 4 der Schleuse 1 heraustreten und so beispielsweise in einen Sicherheitsbereichs eines Flughafens, eines Bahnhofs oder eines anderen Gebäudes gelangen. Mithilfe der Ausgangstürvorrichtung 3' ist der Ausgang 3 der Schleuse 1 öffenbar und schließbar.

Ferner ist im gezeigten Ausführungsbeispiel eine weitere Schleuse 1' angrenzend an den Vorbereich 30 angeordnet. Die weitere Schleuse 1' kann beispielsweise baugleich zur Schleuse 1 ausgebildet sein, sodass der Vorbereich auch durch die weitere Schleuse 1' verlassen werden kann. Des Weiteren ist ein Ausgangsbereich 40 für den Vorbereich 30 vorhanden. Der Ausgangsbereich 40 ist mithilfe einer Türeinrichtung 40' verschlossen und kann bei Bedarf geöffnet werden, beispielsweise für Personen, für die die Schleusen 1, 1' aus körperlichen oder medizinischen Gründen nicht geeignet sind. Der Vorbereich 30 ist ein mithilfe einer Absperrung 32 gegenüber der Umgebung abgesperrter Bereich, der durch eine Zutrittseinrichtung 20 betreten werden kann. Die Zutrittseinrichtung 20 ist derart eingerichtet, dass sie einen Zutritt in den Vorbereich 30 ermöglichen und versperren kann. Beispielsweise umfasst die Zutrittseinrichtung 20 hierfür einen oder mehrere Schwenktürflügel tür. Alternativ sind auch andere Türtypen denkbar. An der Zutrittseinrichtung 20 ist eine Sensoreinrichtung 23 und/oder eine Identitätskontrolleinrichtung 22 und/oder eine Ticketkontrolleinrichtung 21 angeordnet. Es ist denkbar, dass die Zutrittseinrichtung 20 einer Person den Zutritt in den Vorbereich 30 gewährt, wenn eine Ticketkontrolle mithilfe der Ticketkontrolleinrichtung 21 und/oder Identitätskontrolle mithilfe Identitätskontrolleinrichtung 22 durchgeführt wurde. Auf diese Weise kann die Gewährung des Zugangs zu dem Vorbereich 30 kontrolliert erfolgen. Einerseits kann dadurch sichergestellt werden, dass nur eine Person pro Ticketkontrolle und/oder Identitätskontrolle die Zutrittseinrichtung 20 passiert. Andererseits ist dadurch eine Zählung bzw. eine Begrenzung der Personenzahl innerhalb des Vorbereichs 30 und/oder der Schleusen 1, 1' und/oder des Ausgangbereichs 40 möglich. Insbesondere könnte die Öffnung der Zutrittseinrichtung 20 zumindest vorübergehend gesperrt werden, wenn die Personenanzahl innerhalb der genannten Anlagen eine bestimmte Zahl übersteigt. Ferner ist in dem Vorbereich 30 ein Gepäckbeförderungsmittel 31, insbesondere ein Gepäckband, angeordnet, auf das eine Person im Vorbereich 30 ihr Gepäck, inklusive mitgeführter Gegenstände, legen kann bevor die Person in die Schleuse 1 eintritt.

Gemäß einem Ausführungsbeispiel eines erfindungsgemäßen Verfahrens durchquert eine Person die Zutrittseinrichtung 20 und gelangt so in den Vorbereich 30. Das Durchqueren der Zutrittseinrichtung 20 wird mithilfe der Sensoreinrichtung 23 und/oder der Identitätskontrolleinrichtung 22 und/oder der Ticketkontrolleinrichtung 21 gezählt. In dem Vorbereich 30 gibt die Person ihr Gepäck an das Gepäckbeförderungsmittel 21 ab. Befindet sich keine Person in der Schleuse 1 ist die Schleuse 1 in einem Zustand, in dem ihr Ausgang 3, beispielsweise mithilfe der Ausgangstürvorrichtung 3', geschlossen ist und in dem ihr Eingang 2 geöffnet ist. Die Person tritt durch den Eingang 2 in den Innenbereich 4 der Schleuse 1. Der Eingang 2 der Schleuse 1 wird geschlossen, beispielsweise mithilfe der Eingangstürvorrichtung 2'. Es ist denkbar, dass der Eingang 2 in Abhängigkeit einer Detektion des Vereinzelungssensors 6 geschlossen wird, insbesondere dann, wenn der Vereinzelungssensors 6 detektiert, dass die Person den Innenbereich 4 betreten hat. Für die im Innenbereich 4 befindliche Person wird ein Körperscan mithilfe des Körperscanners 5 durchgeführt. Vorzugsweise wird gleichzeitig mit dem Scan des Körperscanners 5 mithilfe des Vereinzelungssensors 6 überprüft, dass sich genau eine Person im Innenbereich 4 der Schleuse 1 befindet. Zeigen der Körperscan und die Messung des Vereinzelungssensors 6 an, dass sich genau eine Person im Innenbereich 4 befindet und die Person keine Gefahrengegenstände mitführt, öffnet sich der Ausgang 3, sodass die Person die Schleuse durch den Ausgang verlassen kann. Andernfalls, wenn mehr als eine Person im Innenraum 4 detektiert wird oder der Körperscan einen Gefahrengegenstand ermittelt, öffnet sich der Ausgang 3 nicht. Es wird stattdessen vorzugsweise eine Warnmeldung und/oder Fehlermeldung angezeigt, beispielsweise einer Sicherheitsperson und/oder der oder den Personen in der Schleuse 1. Wurde beispielsweise detektiert, dass sich mehr als eine Person im Innenbereich 4 der Schleuse 1 befindet, kann eine akustische und/oder optische Warnmeldung ausgegeben werden, die die Personen im Innenraum 4 der Schleuse 1 auffordert die Schleuse 1 durch den Eingang 3 zu verlassen bis sich lediglich eine Person im Innenbereich 4 aufhält. Wurde ein Gefahrengegenstand mithilfe des Körperscanners 5 detektiert, wird zumindest das Sicherheitspersonal mithilfe der Warnmeldung darauf hingewiesen, sodass es weitere Kontrollen oder Gegenmaßnahmen einleiten kann. Es kann somit eine besonders vorteilhafte Automatisierung erreicht werden, mit der Zeit eingespart werden kann. Gleichzeitig kann vermieden werden, dass an jedem Körperscanner Sicherheitspersonal vorhanden sein muss, welches den Personenfluss in den Körperscanner und aus dem Körperscanner überwacht und steuert.

Das erfolgreiche Durchqueren einer Person durch die Schleuse 1 kann gezählt werden, beispielswiese mithilfe der Öffnung des Ausgangs 3, der Messung des Körperscanners 5 und/oder der Messung des Vereinzelungssensors 6. Diese weitere Zählung kann mit der mithilfe der Sensoreinrichtung 23 und/oder der Identitätskontrolleinrichtung 22 und/oder der Ticketkontrolleinrichtung 21 durchgeführten Zählung verglichen werden. Derart kann beispielswiese überwacht werden, ob die Anzahl der den Vorbereich 30 betretenden Personen mit der Anzahl der Personen übereinstimmt, die den Vorbereich 30 verlassen. Hierdurch kann eine besonders vorteilhafte und automatisierbare zusätzliche Sicherheitsüberprüfung eingerichtet werden. Ferner ist dadurch eine Begrenzung der Personenanzahl innerhalb des Vorbereichs 30 und/oder der Schleusen 1, 1' und/oder des Ausgangsbereichs 40 möglich.

### Bezugszeichenliste

- 1: Schleuse
- 1': weitere Schleuse
- 2: Eingang
- 2': Eingangstürvorrichtung
- 3: Ausgang
- 3': Ausgangstürvorrichtung
- 4: Innenbereich
- 5: Körperscanner
- 6: Vereinzelungssensor
- 20: Zutrittseinrichtung
- 21: Ticketkontrolleinrichtung
- 22: Identitätskontrolleinrichtung
- 23: Sensoreinrichtung
- 30: Vorbereich
- 31: Gepäckbeförderungsmittel
- 32: Absperrung
- 40: Ausgangsbereich
- 40': Türeinrichtung

## Patentansprüche

1. System, umfassend zumindest eine Schleuse (1), wobei die Schleuse (1) einen Eingang (2) und einen Ausgang (3) sowie einen zwischen dem Eingang (2) und dem Ausgang (3) angeordneten Innenbereich (4) umfasst,
wobei die Schleuse (1) eine Eingangstürvorrichtung (2') am Eingang (2) der Schleuse (1) aufweist, wobei mithilfe der Eingangstürvorrichtung (2') der Eingang (2) schließbar und öffenbar ist, wobei die Schleuse (1) eine Ausgangstürvorrichtung (3') am Ausgang (3) der Schleuse (1) aufweist, wobei mithilfe der Ausgangstürvorrichtung (3') der Ausgang (3) schließbar und öffenbar ist,
wobei das System zusätzlich einen vor dem Eingang (2) der Schleuse (1) angeordneten Vorbereich (30) aufweist, wobei der Vorbereich (30) durch eine Zutrittseinrichtung (20) betretbar ist, wobei an der Zutrittseinrichtung (20) oder in der Umgebung der Zutrittseinrichtung (20)
-- eine Sensoreinrichtung (23) und/oder
-- eine Identitätskontrolleinrichtung (22) und/oder
-- eine Ticketkontrolleinrichtung (21)
angeordnet ist, mit deren Hilfe in den Vorbereich (30) eintretende Personen kontrollierbar sind,
wobei mit Hilfe der Zutrittseinrichtung (20) in den Vorbereich (30) eintretende Personen zählbar sind,
wobei das System derart eingerichtet ist, dass:
- mithilfe der Sensoreinrichtung (23) und/oder der Identitätskontrolleinrichtung (22) und/oder der Ticketkontrolleinrichtung (21) eine Zählung der in den Vorbereich (30) eintretenden Personen durchgeführt wird,
- mithilfe eines Vereinzelungssensors (6) der Schleuse (1) eine weitere Zählung der den Vorbereich (30) durch die Schleuse (1) verlassenden Personen durchgeführt wird,
- mithilfe der Zählung und der weiteren Zählung eine Personenanzahl innerhalb des Vorbereichs (30) ermittelt und/oder überwacht wird,
wobei die Schleuse (1) einen Körperscanner (5) und den Vereinzelungssensor (6) aufweist,
wobei der Vereinzelungssensor (6) zur Messung einer Personenzahl im Innenbereich (4) der Schleuse (1) eingerichtet ist, wobei der Körperscanner (5) zum Scannen eines Körpers einer Person im Innenbereich (4) der Schleuse (1) eingerichtet ist, wobei die Schleuse (1) ausgebildet und eingerichtet ist, ein Verfahren zur Steuerung eines Personenflusses und/oder zur Personenkontrolle auszuführen, wobei das Verfahren die folgenden Schritte umfasst:
-- mithilfe des Vereinzelungssensors (6) wird die Personenzahl im Innenbereich (4) der Schleuse (1) gemessen,
-- mithilfe des Körperscanners (5) wird der Körper der Person im Innenbereich (4) der Schleuse (1) gescannt,
wobei der Ausgang (3) der Schleuse (1) in Abhängigkeit der Messung der Personenzahl mithilfe des Vereinzelungssensors (6) und in Abhängigkeit des Scans des Körpers mithilfe des Körperscanners (5) geöffnet wird.

2. System nach Anspruch 1, wobei der Körperscanner (5) zur Detektion von Gefahrengegenständen am Körper der Person und/oder an der Kleidung der Person eingerichtet ist.

3. System nach einem der vorhergehenden Ansprüche, wobei der Körperscanner (5) mithilfe von Röntgenstrahlung und/oder Terahertzstrahlung zum Scannen des Körpers der Person eingerichtet ist.

4. System nach einem der vorhergehenden Ansprüche, wobei der Vereinzelungssensor (6) und der Körperscanner (5) derart eingerichtet sind, dass eine Messung des Vereinzelungssensors (6) und ein Scannen des Körperscanners (5) unmittelbar nacheinander oder zumindest teilweise gleichzeitig ausgeführt werden.

5. System nach einem der vorhergehenden Ansprüche, wobei der Vereinzelungssensor (6) in einem Deckenbereich der Schleuse (1) und/oder an einer seitlichen Wandung der Schleuse (1) und/oder im Innenbereich (4) der Schleuse (1), insbesondere mittig im Innenbereich (4) der Schleuse (1), angeordnet ist.

6. System nach einem der vorhergehenden Ansprüche, wobei das System eine Wiedergabevorrichtung aufweist, wobei das System derart konfiguriert ist, dass mithilfe der Wiedergabevorrichtung in Abhängigkeit der Messung der Personenzahl mithilfe des Vereinzelungssensors (6) und/oder in Abhängigkeit des Scans des Körpers mithilfe des Körperscanners (5) eine Warnmeldung ausgebbar ist.

7. Verfahren zur Steuerung eines Personenflusses und/oder zur Personenkontrolle mithilfe eines Systems gemäß einem der Ansprüche 1 bis 6,
wobei das Verfahren die folgenden Schritte umfasst:
- mithilfe der Sensoreinrichtung (23) und/oder der Identitätskontrolleinrichtung (22) und/oder der Ticketkontrolleinrichtung (21) wird eine Zählung der in den Vorbereich (30) eintretenden Personen durchgeführt,
- mithilfe des Vereinzelungssensors (6) der Schleuse (1) wird eine weitere Zählung der den Vorbereich (30) durch die Schleuse (1) verlassenden Personen durchgeführt,
- mithilfe der Zählung und der weiteren Zählung wird eine Personenanzahl innerhalb des Vorbereichs (30) ermittelt und/oder überwacht,
-- mithilfe des Vereinzelungssensors (6) wird eine Personenzahl im Innenbereich (4) der Schleuse (1) gemessen,
-- mithilfe des Körperscanners (5) wird ein Körper einer Person im Innenbereich (4) der Schleuse (1) gescannt,
wobei der Ausgang (3) der Schleuse (1) in Abhängigkeit der Messung der Personenzahl mithilfe des Vereinzelungssensors (6) und in Abhängigkeit des Scans des Körpers mithilfe des Körperscanners (5) geöffnet wird.

8. Verfahren nach Anspruch 7, wobei vor der Messung der Personenzahl mithilfe des Vereinzelungssensors (6) und vor dem Scannen des Körpers mithilfe des Körperscanners (5):
-- sich mindestens eine Person durch den geöffneten Eingang (2) in die Schleuse (1) bewegt, vorzugsweise während der Ausgang (3) der Schleuse (1) geschlossen ist,
-- insbesondere wobei der Eingang (2) der Schleuse (1) geschlossen wird nachdem sich die mindestens eine Person durch den geöffneten Eingang (2) in die Schleuse (1) bewegt hat.

9. Verfahren nach einem der Ansprüche 7 bis 8,
-- wobei die Messung der Personenzahl mithilfe des Vereinzelungssensors (6) und das Scannen des Körpers mithilfe Körperscanners (5), bevorzugt zumindest teilweise gleichzeitig, durchgeführt werden während der Ausgang (3) der Schleuse (1) geschlossen ist,
-- wobei der Ausgang (3) der Schleuse (1) ausschließlich dann geöffnet wird, wenn:
--- die Messung der Personenzahl mithilfe des Vereinzelungssensors (6) ergibt, dass sich genau eine Person im Innenbereich (4) der Schleuse (1) befindet, und zusätzlich
--- das Scannen des Körpers mithilfe Körperscanners (5) ergibt, dass die Person im Innenbereich (4) der Schleuse (1) keine Gefahrengegenstände mitführt.

10. Verfahren nach einem der Ansprüche 7 bis 9, wobei
--- für den Fall, dass die Messung der Personenzahl mithilfe des Vereinzelungssensors (6) ergibt, dass sich mehr als eine Person im Innenbereich (4) der Schleuse (1) aufhält, und/oder
--- für den Fall, dass das Scannen des Körpers mithilfe Körperscanners (5) ergibt, dass eine Person in der Schleuse (1) mindestens einen Gefahrengegenstand mitführt,
der Ausgang (3) geschlossen bleibt, insbesondere wobei eine Warnmeldung mithilfe einer Wiedergabevorrichtung ausgegeben wird.

11. Computerprogrammprodukt, wobei das Computerprogrammprodukt Befehle umfasst, die bei einer Ausführung des Computerprogrammprodukts durch einen Computer, das System nach Ansprüchen 1 bis 6 veranlassen, ein Verfahren nach einem der Ansprüche 7 bis 10 auszuführen.

## Claims

1. A system comprising at least one interlock (1), wherein the interlock (1) comprises an entrance (2) and an exit (3) as well as an inner region (4) arranged between the entrance (2) and the exit (3),
wherein the interlock (1) has an entrance door device (2') at the entrance (2) of the interlock (1), wherein the entrance (2) can be closed and opened with the aid of the entrance door device (2'), wherein the interlock (1) has an exit door device (3') at the exit (3) of the interlock (1), wherein the exit (3) can be closed and opened with the aid of the exit door device (3'),
wherein the system additionally has a pre-region (30) arranged in front of the entrance (2) of the interlock (1), wherein the pre-region (30) can be entered through an access device (20), wherein at the access device (20) or in the surrounding area of the access device (20) is arranged
-- a sensor device (23) and/or
-- an identity verification device (22) and/or
-- a ticket verification device (21),
with the aid of which persons entering the pre-region (30) can be verified, wherein persons entering the pre-region (30) can be counted with the aid of the access device (20),
wherein the system is configured in such manner that:
- a count of the persons entering the pre-region (30) is carried out with the aid of the sensor device (23) and/or the identity verification device (22) and/or the ticket verification device (21),
- a further count of the persons leaving the pre-region (30) through the interlock (1) is carried out with the aid of a separation sensor (6) of the interlock (1),
- a number of persons within the pre-region (30) is determined and/or monitored with the aid of the count and the further count,
wherein the interlock (1) has a body scanner (5) and the separation sensor (6), wherein the separation sensor (6) is configured to measure a number of persons in the inner region (4) of the interlock (1), wherein the body scanner (5) is configured to scan a body of a person in the inner region (4) of the interlock (1), wherein the interlock (1) is designed and configured to carry out a method for controlling a flow of persons and/or for verifying persons, wherein the method comprises the following steps:
-- the number of persons in the inner region (4) of the interlock (1) is measured with the aid of the separation sensor (6),
-- the body of the person in the inner region (4) of the interlock (1) is scanned with the aid of the body scanner (5),
wherein the exit (3) of the interlock (1) is opened depending on the measurement of the number of persons with the aid of the separation sensor (6) and depending on the scan of the body with the aid of the body scanner (5).

2. The system according to claim 1, wherein the body scanner (5) is configured to detect hazardous objects on the body of the person and/or on the clothing of the person.

3. The system according to one of the preceding claims, wherein the body scanner (5) is configured to scan the body of the person with the aid of X-rays and/or terahertz radiation.

4. The system according to one of the preceding claims, wherein the separation sensor (6) and the body scanner (5) are configured in such manner that a measurement by the separation sensor (6) and a scan by the body scanner (5) are carried out immediately one after the other or at least partially simultaneously.

5. The system according to one of the preceding claims, wherein the separation sensor (6) is arranged in a ceiling region of the interlock (1) and/or on a side wall of the interlock (1) and/or in the inner region (4) of the interlock (1), in particular centrally in the inner region (4) of the interlock (1).

6. The system according to one of the preceding claims, wherein the system has a playback device, wherein the system is configured in such manner that a warning message can be output with the aid of the playback device depending on the measurement of the number of persons with the aid of the separation sensor (6) and/or depending on the scan of the body with the aid of the body scanner (5).

7. A method for controlling a flow of persons and/or for verifying persons with the aid of a system according to one of claims 1 to 6,
wherein the method comprises the following steps:
- a count of the persons entering the pre-region (30) is carried out with the aid of the sensor device (23) and/or the identity verification device (22) and/or the ticket verification device (21),
- a further count of the persons leaving the pre-region (30) through the interlock (1) is carried out with the aid of the separation sensor (6) of the interlock (1),
- a number of persons within the pre-region (30) is determined and/or monitored with the aid of the count and the further count,
-- a number of persons in the inner region (4) of the interlock (1) is measured with the aid of the separation sensor (6),
-- a body of a person in the inner region (4) of the interlock (1) is scanned with the aid of the body scanner (5),
wherein the exit (3) of the interlock (1) is opened depending on the measurement of the number of persons with the aid of the separation sensor (6) and depending on the scan of the body with the aid of the body scanner (5).

8. The method according to claim 7, wherein, before measuring the number of persons with the aid of the separation sensor (6) and before scanning the body with the aid of the body scanner (5):
-- at least one person moves through the open entrance (2) into the interlock (1), preferably while the exit (3) of the interlock (1) is closed,
-- in particular, wherein the entrance (2) of the interlock (1) is closed after the at least one person has moved through the open entrance (2) into the interlock (1).

9. The method according to one of claims 7 to 8,
-- wherein the measurement of the number of persons with the aid of the separation sensor (6) and the scanning of the body with the aid of the body scanner (5) are carried out, preferably at least partially simultaneously, while the exit (3) of the interlock (1) is closed,
-- wherein the exit (3) of the interlock (1) is opened only if:
--- the measurement of the number of persons with the aid of the separation sensor (6) shows that there is exactly one person located in the inner region (4) of the interlock (1), and additionally
--- the scanning of the body with the aid of the body scanner (5) shows that the person in the inner region (4) of the interlock (1) is not carrying any dangerous objects.

10. The method according to one of claims 7 to 9, wherein
--- in the event that the measurement of the number of persons with the aid of the separation sensor (6) shows that more than one person is present in the inner region (4) of the interlock (1), and/or
--- in the event that the scanning of the body with the aid of the body scanner (5) shows that a person in the interlock (1) is carrying at least one dangerous object, the exit (3) remains closed, in particular wherein a warning message is output with the aid of a playback device.

11. A computer program product, wherein the computer program product comprises commands which, when the computer program product is executed by a computer, cause the system according to claims 1 to 6 to carry out a method according to one of claims 7 to 10.

## Revendications

1. Système, comprenant au moins un sas (1), dans lequel le sas (1) comprend une entrée (2) et une sortie (3) ainsi qu'une zone intérieure (4) agencée entre l'entrée (2) et la sortie (3),
dans lequel le sas (1) présente un dispositif de porte d'entrée (2') au niveau de l'entrée (2) du sas (1), dans lequel l'entrée (2) peut être fermée et ouverte à l'aide du dispositif de porte d'entrée (2'), dans lequel le sas (1) présente un dispositif de porte de sortie (3') au niveau de la sortie (3) du sas (1), dans lequel la sortie (3) peut être fermée et ouverte à l'aide du dispositif de porte de sortie (3'), dans lequel le système présente en outre une zone d'attente (30) agencée devant l'entrée (2) du sas (1), dans lequel la zone d'attente (30) est praticable à travers un équipement d'accès (20), dans lequel au niveau de l'équipement d'accès (20) ou dans l'environnement de l'équipement d'accès (20)
-- un équipement de capteur (23) et/ou
-- un équipement de contrôle d'identité (22) et/ou
-- un équipement de contrôle de billets (21)
est agencé, à l'aide duquel des personnes entrant dans la zone d'attente (30) peuvent être contrôlées,
dans lequel les personnes entrant dans la zone d'attente (30) peuvent être comptées à l'aide de l'équipement d'accès (20),
dans lequel le système est conçu de telle sorte que :
- à l'aide de l'équipement de capteur (23) et/ou de l'équipement de contrôle d'identité (22) et/ou de l'équipement de contrôle de billets (21), un comptage des personnes entrant dans la zone d'attente (30) est réalisé,
- à l'aide d'un capteur de séparation (6) du sas (1), un comptage supplémentaire des personnes quittant la zone d'attente (30) à travers le sas (1) est réalisé,
- à l'aide du comptage et du comptage supplémentaire, un nombre de personnes à l'intérieur de la zone d'attente (30) est déterminé et/ou surveillé,
dans lequel le sas (1) présente un dispositif de balayage corporel (5) et le capteur de séparation (6), dans lequel le capteur de séparation (6) est conçu pour mesurer un nombre de personnes dans la zone intérieure (4) du sas (1), dans lequel le dispositif de balayage corporel (5) est conçu pour balayer un corps d'une personne dans la zone intérieure (4) du sas (1), dans lequel le sas (1) est construit et conçu pour exécuter un procédé de commande d'un flux de personnes et/ou de contrôle de personnes, dans lequel le procédé comprend les étapes suivantes :
-- à l'aide du capteur de séparation (6), le nombre de personnes dans la zone intérieure (4) du sas (1) est mesuré,
-- à l'aide du dispositif de balayage corporel (5), le corps de la personne est balayé dans la zone intérieure (4) du sas (1),
dans lequel la sortie (3) du sas (1) est ouverte en fonction de la mesure du nombre de personnes à l'aide du capteur de séparation (6) et en fonction du balayage du corps à l'aide du dispositif de balayage corporel (5).

2. Système selon la revendication 1, dans lequel le dispositif de balayage corporel (5) est conçu pour détecter des objets dangereux sur le corps de la personne et/ou sur les vêtements de la personne.

3. Système selon l'une des revendications précédentes, dans lequel le dispositif de balayage corporel (5) est conçu pour balayer le corps de la personne à l'aide de rayons X et/ou de rayonnement térahertz.

4. Système selon l'une des revendications précédentes, dans lequel le capteur de séparation (6) et le dispositif de balayage corporel (5) sont conçus de telle sorte qu'une mesure du capteur de séparation (6) et un balayage du dispositif de balayage corporel (5) sont exécutés directement l'un après l'autre ou au moins partiellement simultanément.

5. Système selon l'une des revendications précédentes, dans lequel le capteur de séparation (6) est agencé dans une zone de plafond du sas (1) et/ou au niveau d'une paroi latérale du sas (1) et/ou dans la zone intérieure (4) du sas (1), en particulier au centre de la zone intérieure (4) du sas (1).

6. Système selon l'une des revendications précédentes, dans lequel le système présente un dispositif de restitution, dans lequel le système est configuré de telle sorte qu'un message d'avertissement peut être émis à l'aide du dispositif de restitution en fonction de la mesure du nombre de personnes à l'aide du capteur de séparation (6) et/ou en fonction du balayage du corps à l'aide du dispositif de balayage corporel (5).

7. Procédé de commande d'un flux de personnes et/ou de contrôle de personnes à l'aide d'un système selon l'une des revendications 1 à 6,
dans lequel le procédé comprend les étapes suivantes :
- à l'aide de l'équipement de capteur (23) et/ou de l'équipement de contrôle d'identité (22) et/ou de l'équipement de contrôle de billets (21), un comptage des personnes entrant dans la zone d'attente (30) est réalisé,
- à l'aide du capteur de séparation (6) du sas (1), un comptage supplémentaire des personnes quittant la zone d'attente (30) à travers le sas (1) est réalisé,
- à l'aide du comptage et du comptage supplémentaire, un nombre de personnes à l'intérieur de la zone d'attente (30) est déterminé et/ou surveillé,
-- à l'aide du capteur de séparation (6), un nombre de personnes dans la zone intérieure (4) du sas (1) est mesuré,
-- à l'aide du dispositif de balayage corporel (5), un corps d'une personne est balayé dans la zone intérieure (4) du sas (1),
dans lequel la sortie (3) du sas (1) est ouverte en fonction de la mesure du nombre de personnes à l'aide du capteur de séparation (6) et en fonction du balayage du corps à l'aide du dispositif de balayage corporel (5).

8. Procédé selon la revendication 7, dans lequel, avant la mesure du nombre de personnes à l'aide du capteur de séparation (6) et avant le balayage du corps à l'aide du dispositif de balayage corporel (5) :
-- au moins une personne se déplace à travers l'entrée (2) ouverte dans le sas (1), de préférence pendant que la sortie (3) du sas (1) est fermée,
-- en particulier dans lequel l'entrée (2) du sas (1) est fermée après que l'au moins une personne se soit déplacée dans le sas (1) à travers l'entrée (2) ouverte.

9. Procédé selon l'une des revendications 7 à 8,
-- dans lequel la mesure du nombre de personnes à l'aide du capteur de séparation (6) et le balayage corporel à l'aide du dispositif de balayage corporel (5) sont réalisés, de préférence au moins partiellement simultanément, pendant que la sortie (3) du sas (1) est fermée,
-- dans lequel la sortie (3) du sas (1) n'est ouverte que si :
--- la mesure du nombre de personnes à l'aide du capteur de séparation (6) indique qu'il y a exactement une personne dans la zone intérieure (4) du sas (1), et en outre
--- le balayage corporel effectué à l'aide du dispositif de balayage corporel (5) indique que la personne dans la zone intérieure (4) du sas (1) ne transporte aucun objet dangereux.

10. Procédé selon l'une des revendications 7 à 9, dans lequel
--- dans le cas où la mesure du nombre de personnes à l'aide du capteur de séparation (6) indique que plus d'une personne se trouve dans la zone intérieure (4) du sas (1), et/ou
--- dans le cas où le balayage corporel effectué à l'aide du dispositif de balayage corporel (5) indique qu'une personne dans le sas (1) transporte au moins un objet dangereux,
la sortie (3) reste fermée, en particulier dans lequel un message d'avertissement est émis à l'aide d'un dispositif de restitution.

11. Produit de programme informatique, dans lequel le produit de programme informatique comprend des instructions qui, lors de l'exécution du produit de programme informatique à travers un ordinateur, amènent le système selon les revendications 1 à 6 à exécuter un procédé selon l'une des revendications 7 à 10.
